# EUROPEAN PATENT APPLICATION

(11) **EP 3 051 073 A1**
(43) Date of publication of application: **03.08.2016**
(21) Application number: 16152568.8
(22) Date of filing: 25.01.2016
(51) Int. Cl.: F01D 11/12, C08J 9/00

(54) **ABRADABLE SEAL MATERIAL**

(30) Priority: 29.01.2015 US 201514608707
(71) Applicant: United Technologies Corporation, Hartford, CT 06101 (US)
(72) Inventor: GUO, Changsheng, South Windsor, CT 06074 (US); EASTMAN, Scott, Glastonbury, CT 06033 (US)
(74) Representative: de Bresser, Sara Jean

(57) **Abstract**

An abradable seal material comprises: a polyimide foam matrix; and a thermal conductivity-enhancing filler in the matrix.

## Description

### BACKGROUND

The disclosure relates to abradable seal material. More particularly, the disclosure relates to polymeric abradable seal material for gas turbine engines.

Polyimide foam is used as an abradable seal for some compressor stages of gas turbine engines. See, United States Patent 6899339 of Sanders et al., issued May 31, 2005. Processes for making polyimide foams are numerous but exemplary processes are captured in United States Patents 4621015A, 4780167A, and US5338765A. The polyimide foam cure may be any suitable open-cell or closed-cell polyimide foam, manufactured by any suitable method. Typical polyimide foams include those open-celled foams disclosed by Gagliani et al. in U.S. Pat. Nos. 4,426,463, 4,439,381 and 4,506,038, by Long et al. in U.S. Pat. Nos. 4,518,717 and by Shulman et al. in U.S. Pat. No. 4,467,597. The polyimide foam may incorporate any suitable additives such as surfactants to improve uniformity of cell structure, blowing agents, fillers, or other agents as desired. Exemplary surfactant concentration is from about 0.5 to 2 wt % (based on the weight of the liquid foam precursor).

Additionally lubricity enhancers (e.g., graphite) for unfoamed polyimide are disclosed in United States Patent 6352264 of Dalzell, Jr., et al., issued March 5, 2002.

An exemplary situation involves a foam seal positioned to rub against a metallic (e.g., titanium or titanium alloy) ring edge (knife edge). One exemplary knife edge is a knife edge of an inter-disk spacer or other rotor seal engaging an abradable coating on inboard surfaces of the inboard shrouds of a vane stage. Another exemplary knife edge is a knife edge of the outboard surface of shrouds of a blade stage engaging an abradable coating on a mating non-rotating air seal of the case.

### SUMMARY

One aspect of the disclosure involves an abradable seal material comprising: a polyimide foam matrix; and a thermal conductivity-enhancing filler in the matrix.

A further embodiment may additionally and/or alternatively include the thermal conductivity-enhancing filler being effective to provide the abradable seal material with a thermal conductivity at least 100% greater than a thermal conductivity of the polyimide foam matrix at the same porosity.

A further embodiment may additionally and/or alternatively include the filler being selected from the group consisting of aluminum nitride, boron nitride, silicon carbide, carbon fiber, expanded graphite, graphene, carbon nanotubes, and combinations thereof.

A further embodiment may additionally and/or alternatively include one or more of: said aluminum nitride being present as particles of at least 95% purity by weight; said boron nitride being present as particles or nanoplatelets; said silicon carbide being present as chopped fiber; said carbon fiber being present as chopped fiber; said expanded graphite being present as powder or wormlike strands; said graphene being present as powder; and said carbon nanotubes being present as powder of at least 80% purity.

A further embodiment may additionally and/or alternatively include one or more of: said aluminum nitride being present as particles of characteristic size less than or equal to 1000 micrometers; said boron nitride being present as particles of characteristic size less than or equal to 200 micrometers or nanoplatelets of in-plane dimension of less than 200 micrometers and a thickness of less than 20 nanometers; said silicon carbide being present as chopped fiber with a characteristic length less than or equal to 100 microns; said carbon fiber being present as chopped fiber with a characteristic length less than or equal to 1000 microns; said expanded graphite being present as powder, particulate, flake or wormlike strands where the characteristic feature is the expanded sheet-to-sheet spacing which is at least 0.418 nanometers; said graphene being present as powder where the individual elements are graphene sheets or platelets with a characteristic thickness less than 20 nanometers and an in-plane dimensions between 20 nanometers and 200 microns; and said carbon nanotubes are present as powder where the individual elements are carbon nanotubes with a diameter less than 500 nanometers.

A further embodiment may additionally and/or alternatively include one or more of: said aluminum nitride being present at 1.0% to 60.0% by weight of the abradable seal material; said boron nitride being present at 1.0% to 60.0% by weight of the abradable seal material; said silicon carbide being present at 1.0% to 60.0% by weight of the abradable seal material; said carbon fiber being present at 1.0% to 60.0% by weight of the abradable seal material; said expanded graphite being present at 1.0% to 60.0% by weight of the abradable seal material; and said graphene being present at 1.0% to 60.0% by weight of the abradable seal material; and said carbon nanotubes are present at 1.0% to 60.0% by weight of the abradable seal material.

A further embodiment may additionally and/or alternatively include a by weight content of said thermal conductivity-enhancing filler of 1.0% to 60.0%.

A further embodiment may additionally and/or alternatively include a by weight content of said polyimide foam matrix being 40.0% to 99.0%.

A further embodiment may additionally and/or alternatively include a seal including the abradable seal material and further comprising a substrate to which the abradable seal material being secured.

A further embodiment may additionally and/or alternatively include the seal being a continuous or segmented annulus.

A further embodiment may additionally and/or alternatively include turbomachine comprising the seal and further comprising a rotor having a metallic sealing edge in facing proximity or contact with a face of the abradable seal material.

A further embodiment may additionally and/or alternatively include turbomachine wherein the metallic sealing edge comprising a knife edge.

A further embodiment may additionally and/or alternatively include the turbomachine being a gas turbine engine wherein the rotor is a compressor rotor.

A further embodiment may additionally and/or alternatively include a method for manufacturing the abradable seal material. The method comprises: preparing a liquid polyimide precursor with said thermal conductivity-enhancing filler and blowing agent; introducing the liquid polyimide precursor to a mold; and heating to a temperature sufficient to cure said polyimide precursor to form a polyimide foam.

A further embodiment may additionally and/or alternatively include the method further comprising cutting, milling, trimming or otherwise machining or finishing polyimide foam to the desired dimensions for the abradable seal material.

A further embodiment may additionally and/or alternatively include a method for using the abradable seal material. The method comprises rotating a rotor bearing a metallic knife edge sealing element, the rotating causing a rotating rub between the sealing element and the abradable seal material.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a partial, partially schematic, central longitudinal view of a turbofan engine.
FIG. 2 is a partial, partially schematic, central longitudinal view of a turbofan engine compressor.
FIG. 3 is a partially schematic longitudinal sectional view of a seal.

Like reference numbers and designations in the various drawings indicate like elements.

### DETAILED DESCRIPTION

An exemplary modern medium density polyimide foam is sold under the trademark VESPEL SF-0930 by E. I. du Pont de Nemours and Company of Wilmington, Delaware and has very low thermal conductivity (k<∼0.07 W/m K from manufacturer literature). The Ti alloy (e.g., at least 50% Ti by weight) typically also has relative low thermal conductivity (∼ 6.7 W/m K, but much higher than the polyimide foam). The relatively lower thermal conductivity of the rub pair cannot effectively conduct rub heat generated away from the rub zone and can lead to high temperature rise at the rub interface. Because of the thermal property differences, very little heat generated at the rub interface is conducted into the polyimide and most of the heat is conducted to the Ti ring edge. This can lead high temperature rise in the ring that may exceed the Beta temperature of the Ti alloy and can cause microstructural change of the titanium alloy.

A polyimide foam material with enhanced thermal conductivity may reduce the interface temperature rise, and furthermore reduce the temperature rise in the titanium ring (knife edge).

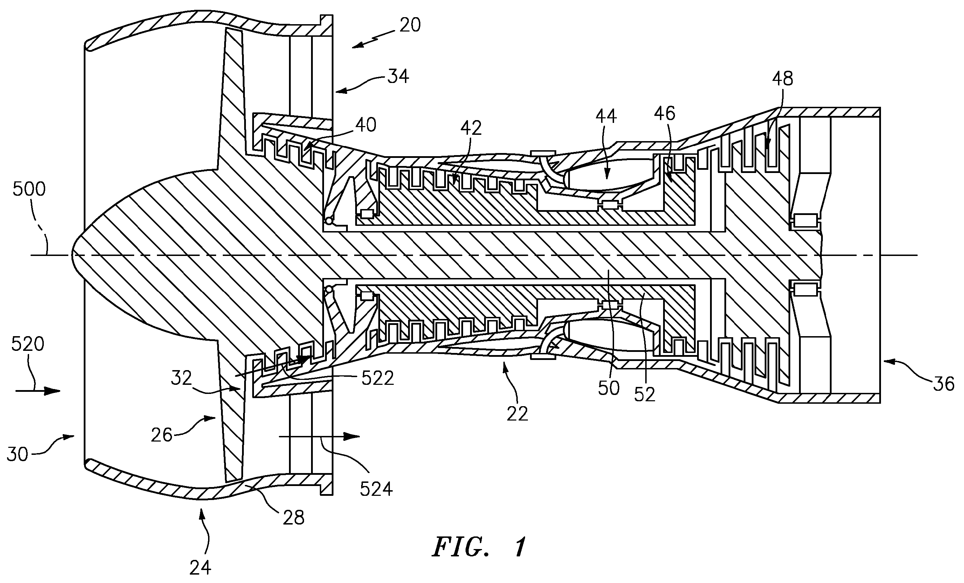

FIG. 1 shows a gas turbine engine 20 having an engine case 22 surrounding a centerline or central longitudinal axis 500. An exemplary gas turbine engine is a turbofan engine having a fan section 24 including a fan 26 within a fan case 28. The exemplary engine includes an inlet 30 at an upstream end of the fan case receiving an inlet flow along an inlet flowpath 520. The fan 26 has one or more stages 32 of fan blades. Downstream of the fan blades, the flowpath 520 splits into an inboard portion 522 being a core flowpath and passing through a core of the engine and an outboard portion 524 being a bypass flowpath exiting an outlet 34 of the fan case.

The core flowpath 522 proceeds downstream to an engine outlet 36 through one or more compressor sections, a combustor, and one or more turbine sections. The exemplary engine has two axial compressor sections and two axial turbine sections, although other configurations are equally applicable. From upstream to downstream there is a low pressure compressor section (LPC) 40, a high pressure compressor section (HPC) 42, a combustor section 44, a high pressure turbine section (HPT) 46, and a low pressure turbine section (LPT) 48. Each of the LPC, HPC, HPT, and LPT comprises one or more stages of blades which may be interspersed with one or more stages of stator vanes.

In the exemplary engine, the blade stages of the LPC and LPT are part of a low pressure spool mounted for rotation about the axis 500. The exemplary low pressure spool includes a shaft (low pressure shaft) 50 which couples the blade stages of the LPT to those of the LPC and allows the LPT to drive rotation of the LPC. In the exemplary engine, the shaft 50 also drives the fan. In the exemplary implementation, the fan is driven via a transmission (not shown, e.g., a fan gear drive system such as an epicyclic transmission) to allow the fan to rotate at a lower speed than the low pressure shaft.

The exemplary engine further includes a high pressure shaft 52 mounted for rotation about the axis 500 and coupling the blade stages of the HPT to those of the HPC to allow the HPT to drive rotation of the HPC. In the combustor 44, fuel is introduced to compressed air from the HPC and combusted to produce a high pressure gas which, in turn, is expanded in the turbine sections to extract energy and drive rotation of the respective turbine sections and their associated compressor sections (to provide the compressed air to the combustor) and fan.

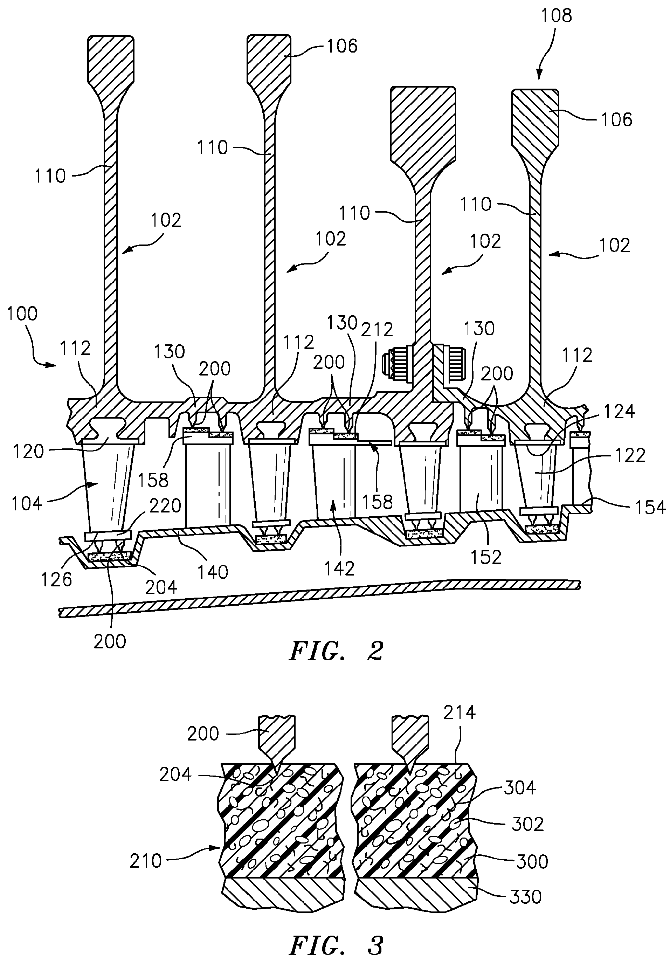

FIG. 2 shows a one of the HPC or LPC. A rotor 100 of the compressor comprises a plurality of disks 102 associated with and bearing respective stages of the compressor blades 104. Each exemplary disk comprises an inboard protuberant bore 106 surrounding an aperture 108 and a web 110 extending radially outboard from the bore to a rim 112. The rim bears features (e.g., firtree or dovetail slots shown schematically) for mounting corresponding features (e.g., roots) of the blades. The roots may depend from the undersides of blade platforms 120 and airfoils 122 may extending radially outward from outboard faces 124 of the platforms from the platforms to tips 126. The airfoils have a leading edge and a trailing edge. A pressure side surface and a suction side surface extend between the leading and trailing edges.

Inter-disk spacers 130 may extend between the disks and may be unitarily formed with one or both disks or otherwise secured thereto. A section of the engine case 140 along the HPC encircles the blade stages and bears stages of stator vanes 142 alternatingly interspersed with the blade stages. The vanes each comprise an airfoil 152 extending radially inward from an inboard face 154 of the case or a shroud (not shown) carried by the case. For example vanes may comprise the unitarily formed combination of one or more airfoils 152 with an outboard shroud (not shown) and an inboard platform or shroud 158. The airfoils 152 have a leading edge and a trailing edge. A pressure side surface and suction a side surface extend between the leading and trailing edges.

To reduce gas leakage and improve efficiency, the blades 104 may be sealed relative to the case 140 and the vanes may be sealed relative to the rotor 100 (e.g., relative to the spacers 130). The seals must accommodate the relative angular movement and radial movement associated with factors including differential thermal expansion, rotor centrifugal expansion, and vibration. A good seal system design enables that the rotating metallic part (knife edge) to engage with the abradable seal by compliance and/or material removal of the abradable seal without causing damage to the system. In the illustrated example, both sealings are accomplished by metallic knife edge sealing elements 200 of the rotor engaging abradable seal material 210 of the stator.

Each of the exemplary spacers 130 bears one or more (e.g., a pair of) knife edge sealing elements 200 extending radially outward to edges 204 (FIG. 3) and extending circumferentially in a full annulus about the rotor. These interact with bodies of the seal material 210 carried on the inboard faces 212 (FIG. 2) of the vane platforms. The seal material has an inboard surface or face 214 (FIG. 3) for engaging the corresponding outboard edges 204 of the sealing elements. Depending on operational condition there may be contacting engagement or close facing spaced-apart relationship. For example, close facing spaced relationship with the engine off may become contacting engagement as the engine speeds up.

Similarly, the blades have tip shrouds 220 (FIG. 2) bearing pair of knife edge sealing elements 200 extending radially outward to edges 204. In the illustrated example, the respective two sealing elements of the blades of a given stage combine to form two segmented annuli about the rotor. The case bears seal material 210 positioned to interact with the sealing elements (e.g., a full annulus of abradable seal material on an inboard face of the case).

The seal material comprises a polyimide foam 300 (FIG. 3) having an open porosity 302 and serving as a matrix for a filler material 304. Relative and absolute size/geometry of the matrix material, pores, and filler shown are not to scale or proportion. The filler functions to enhance thermal conductivity to help conduct friction-generated heat away from the sealing elements 200 and the adjacent seal material and into the metallic substrate 330 of the component carrying the seal material. The residual open porosity (i.e., not occupied by filler) reduces weight and provides compliance to help avoid damage to the sealing elements and seal material.

Exemplary filler material for enhancing thermal conductivity is aluminum nitride (AlN), boron nitride (BN), silicon carbide (SiC), carbon fiber, carbon nanotubes, expanded graphite, graphene, and mixtures thereof.

Exemplary polyimide foam is present at weight concentrations of 40-99% of the filled abradable material, more particularly 60.0-99.0 weight percent or 75.0-95.0 weight percent.

The filler may then leave a net open porosity of 40.0-80.0 percent or 55.0-75.0 percent.

The filler may be present in a concentration of 1.0-60.0 weight percent or 1.0-40.0 weight percent or 5.0-25.0 weight percent. This may be effective to raise a thermal conductivity of the seal material by at least 100%, more particularly at least 200% or at least 500%, relative to a baseline polyimide sealing material having similar open porosity.

Exemplary aluminum nitride filler material has size dimensions of less than or equal to 100 micrometers, more particularly less than or equal to 1.0 micrometers or less than or equal to 0.5 micrometers. The nanosize scale of these materials is preferred as this enables better dispersion and reduction in average particle-to-particle spacing thus enhancing conductivity whether it be thermal or electrical. It may be present at concentrations noted above when used alone. When used in combinations, smaller numbers may be appropriate to yield aggregate numbers such as those above. Aluminum nitride may be particularly useful because it has high thermal stability and thermal conductivity. Exemplary purity levels are at least 95%, with commercially available aluminum nitride available at 98+% purities.

Exemplary boron nitride filler material can be used in either particulate or exfoliated nanoplatelet form. The particulate form can be used in characteristic transverse (in-plane) dimensions of less than or equal to 200 micrometers, more particularly or less than or equal to 100 micrometers or less than or equal to 10 micrometers or less than or equal to 1.0 micrometers or less than or equal to 0.5 micrometers where again the smaller dimensions are preferred. Alternatively the exfoliated nanoplatelet boron nitride can be used and is preferential for thermal conductivity due to its 2-dimensional structure. Nanoplatelets have at least one size dimension (thickness) that is less than or equal to 20 nanometers and particularly less than or equal to 10 nanometers. These platelet structures could be single sheets of boron nitride or a plurality of stacked sheets with a total platelet thickness less than or equal to the aforementioned thicknesses. Nanoplatelets are particularly good at enhancing conductivity due to the two-dimensional nature of their shape. This allows for a material to be enhanced to the same thermal conductivity with nanoplatelet filler at a lower loading level than with traditional particulate or one-dimensional fillers. Exemplary purity levels for particles or nanoplatelets are at least 95%, with commercially available boron nitride available at 98+% purities.

Boron nitride may be particularly useful because it has high thermal stability and thermal conductivity while also being electrically insulating. In addition, literature reports have documented that boron nitride in combination with carbon fillers such as carbon nanotubes, graphene, expanded graphite, or carbon black show a synergistic affect with respect to improved thermal conductivity. *See, e.g.,* S. Y. Pak et al. "Synergistic improvement of thermal conductivity of thermoplastic composites with mixed boron nitride and multi-walled carbon nanotube fillers", Carbon, Volume 50, Issue 13, November 2012, Pages 4830-4838, Elsevier B.V., Amsterdam, Netherlands.

Exemplary silicon carbide filler material can be used in either particulate or chopped fiber form. The particulate form can be used in size dimensions of less than or equal to 100 micrometers, more particularly less than or equal to 1 micrometers or 0.5 micrometers where again the smaller dimensions are preferred.

Alternatively the chopped fiber form of silicon carbide can have a diameter of less than or equal to 100 micrometers and more particularly less than or equal to 10 micrometers. The characteristic length of the fiber can range from 50 micrometers to greater than 500 micrometers. Exemplary characteristic lengths (e.g., weighted mean or weighted median) are 50 micrometers to 500 micrometers. Silicon carbide may be particularly useful because it has high thermal stability and thermal conductivity.

Exemplary carbon fiber material is a high aspect ratio and typically cylindrical filler that can have a diameter of less than or equal to 50 micrometers and more particularly less than or equal to 10 micrometers. The length of the fiber can range from 50 micrometers to greater than 1000 micrometers. Exemplary characteristic lengths (e.g., weighted mean or weighted median) are 50 micrometers to 500 micrometers. Carbon fiber is particularly useful because it has moderate thermal stability and significantly lower density than the inorganic fillers mentioned previously. In addition, fiber sizing can be modified to tailor the fiber surface chemistry to improve fiber dispersion and adhesion to the polymer matrix. In contrast with lubricant graphites, carbon fiber is comprised of continuous carbon filaments where the crystal structure and crystal grain alignment are different from graphite. Carbon fiber typically has much better grain alignment. In addition, graphite has a hexagonal packed structure, where there is an atom in each adjacent plane that sits directly over the center of the hexagonal ring. In turbostatic graphite, the adjacent planes are shifted with respect to one another and are out of registry. This results in an increase in the interlayer spacing, which can increase from 0.3354 nanometer to more than 0.345 nanometer. This shift in crystal morphology results in superior mechanical properties over graphite. When used as a filler, carbon fiber offers a greater improvement in thermal conductivity enhancement due to the fiber length or high aspect ratio.

Exemplary carbon nanotube filler material can have a diameter of less than or equal to 500 nanometers and more particularly less than or equal to 50 nanometers. The length of the fiber can range from 100 nanometers to greater than 100 micrometers. Exemplary characteristic lengths (e.g., weighted mean or weighted median) are 1 micrometer to greater 500 micrometers, more particularly, 2 micrometers to 20 micrometers. Carbon nanotubes are particularly useful because it has moderate thermal stability and significantly lower density than the inorganic fillers mentioned previously. In addition, the nanoscale size and high aspect ratio of these fillers provides better dispersion and lower average spacing between filler thus enhancing material conductivity (thermal or electrical). In addition carbon nanotube surface chemistry can be modified to tailor improve nanotube dispersion, filler/matrix adhesion and interfacial thermal resistance between filler and matrix.

Carbon nanotubes could be in the form of single, double, or multi-walled tubes. The nanotubes may be present in bulk form appearing as a fine powder upon naked eye visual inspection. In contrast with lubricant graphites, carbon nanotubes do not have a stacked platelet crystal lattice. Nanotubes have a cylindrical geometry where the carbon sheet (or sheets in the case of multi-wall nanotubes) is rolled up on itself. The way the sheets are rolled is defined by its chiral angle. Nanotubes with different chiral angles can exhibit vastly different properties. Because there is no stacked platelet structure there is no lubrication mechanism as is present in graphite where the carbon sheets in graphite can slide and sluff off to provide lubrication.

The length and aspect ratios of nanotubes can provide improved thermal conductivity enhancement when used as a filler. Due to manufacturing processes, commercial carbon nanotubes are particularly likely to be accompanied by other carbon forms or grades. Exemplary purity for a given wall count and size is 80% by weight or greater (or 85% or greater for standard industrial grades; or 95% or greater for research/laboratory grades) with the other 20% including other counts, sizes, or carbon allotropes/species and any inorganic impurities. As a useful proxy, the filler contents given above may be applied to the impure material or just the pure component thereof. Similar proxies may be used for the other filler materials disclosed.

Exemplary expanded graphite filler material is an expanded (lower density) and much easier to exfoliate version of graphite that can be used and is preferential over non-expanded (natural) graphite. The expansion refers to the sheet spacing of the graphite. Traditional lubricant graphite has a well-defined sheet to sheet spacing of approximately 0.335 nanometers. Expanded graphite has an average sheet to sheet spacing that is greater than 25% of the natural graphite sheet spacing of 0.335 nanometers (e.g., greater than 0.418 nanometers) and the sheets are irregularly spaced making sheet spacing measurements by x-ray diffraction virtually impossible.

Another term for expanded graphite is graphite worms due to the worm-like strand appearance of its shape after the graphite expansion. These may be crushed or otherwise reduced to powder form. In such powder form, exemplary dimensions are discussed below. Thermal conductivity of materials with expanded graphite are superior to traditional non-expanded graphite due to its ability to distribute the better exfoliated carbon layers into 2-dimensional platelet structures and even produce some graphene sheets with enough mixing energy either through shear, sonication or other methods. The majority of the expanded graphite remains as expanded graphite and not graphene however. Exemplary expanded graphite powder has at least one size dimension that is less than or equal to 500 nanometers and particularly less than or equal to 200 nanometers or an exemplary 50 nanometers to 200 nanometers or 75 nanometers to 150 nanometers. The other dimensions could be between 50 nanometers and 500 micrometers. Nanoplatelets are particularly good at enhancing conductivity due to the 2-d nature of their shape. This allows for a material to be enhanced to the same thermal conductivity with nanoplatelet filler at a lower loading level than with traditional particulate or 1-d fillers.

Expanded graphite is particularly useful because it has moderate thermal stability and significantly lower density than the inorganic fillers mentioned previously and even lower than non-expanded graphite filler. In addition, the expanded graphite can exfoliate much easier and provided smaller more dispersed carbon fillers including nanoplatelet moieties. The 2-d shape of these fillers provides better thermal conductivity at the same loading of 1-d fillers. Expanded graphite has a substantial cost advantage over pure graphene nanoplatelets as a tremendous amount of energy and care need to be taken to produce fully exfoliated or synthetically grown graphene.

Exemplary graphene filler material a 2-d nanoplatelets geometry with at least one size dimension that is less than or equal to 20 nanometers and particularly less than or equal to 10 or 1 nanometer. In the thickness direction graphene sheets can be 1 atomic layer thick or have a plurality of sheets stacked on top of one another as long as the thickness is less than the 50 nanometers. The other dimensions could be between 20 nanometers and 200 micrometers. Nanoplatelets are particularly good at enhancing conductivity due to the 2-d nature of their shape. This allows for a material to be enhanced to the same thermal conductivity with nanoplatelet filler at a lower loading level than with traditional particulate or 1-d fillers. The graphene may be present in bulk form appearing as a fine powder upon naked eye visual inspection.

Fully dispersed and exfoliated graphene is the best for enhancing thermal conductivity especially at low filler loadings. This also enables lighter weight due to the graphene material be inherently low weight and less is required to achieve a given thermal conductivity. In contrast with lubricant graphites, graphene is a small platelet sheet structure that is typically made synthetically but can be derived from graphite under extreme processing conditions. Where graphite is almost entirely made up of carbon sheet structures with a defined sheet-to-sheet spacing of 0.355 nanometers, graphene is predominantly comprised of monolayer or at least less than 10 layers of carbon sheets that are otherwise fully exfoliated. The lubrication mechanism of graphite is facilitated by slipping of carbon sheets in bulk graphite powders of size scales over 1 micrometer. Graphene is present especially in the thickness dimension well below 1 micrometer and the mechanical slipping of sheets is virtually impossible thus no lubrication is minimal for materials that incorporate graphene filler.

Exemplary manufacture methods for the metallic components and the polyimide foam may be conventional in the art with the addition of appropriate steps to introduce the filler. For example, the filled foam may be produced by generally conventional methods as sheets and then conventionally cut to shape and conventionally adhesively bonded to the corresponding carrying metallic components.

In one example, foam precursor material is premixed comprising polyimide or polyimide precursors, fillers, and either physical or chemical blowing agents. This material can be processed by extrusion, injection molding, or other typical foam processing techniques. These materials are then processed into standard sheets or near-net shape parts that are then cut to the desired final dimensions. These final cut parts are then adhered or otherwise mounted to surface inboard surfaces of the inboard shrouds of a vane stage or other surfaces of an engine where an abradable seal is required.

The use of "first", "second", and the like in the following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

Where a measure is given in English units followed by a parenthetical containing SI or other units, the parenthetical's units are a conversion and should not imply a degree of precision not found in the English units.

Preferred embodiments of the invention are described below:
1. An abradable seal material comprising:
   a polyimide foam matrix; and
   a thermal conductivity-enhancing filler in the matrix.
2. The abradable seal material of embodiment 1 wherein:
   the thermal conductivity-enhancing filler is effective to provide the abradable seal material with a thermal conductivity at least 100% greater than a thermal conductivity of the polyimide foam matrix at the same porosity.
3. The abradable seal material of embodiment 1 wherein:
   the filler comprises material is selected from the group consisting of aluminum nitride, boron nitride, silicon carbide, carbon fiber, expanded graphite, graphene, carbon nanotubes, and combinations thereof.
4. The abradable seal material of embodiment 3 wherein one or more of:
   said aluminum nitride is present as particles of at least 95% purity by weight;
   said boron nitride is present as particles or nanoplatelets;
   said silicon carbide is present as chopped fiber;
   said carbon fiber is present as chopped fiber;
   said expanded graphite is present as powder or wormlike strands;
   said graphene is present as powder; and
   said carbon nanotubes are present as powder of at least 80% purity.
5. The abradable seal material of embodiment 3 wherein one or more of:
   said aluminum nitride is present as particles of characteristic size less than or equal to 1000 micrometers;
   said boron nitride is present as particles of characteristic size less than or equal to 200 micrometers or nanoplatelets of in-plane dimension of less than 200 micrometers and a thickness of less than 20 nanometers;
   said silicon carbide is present as chopped fiber with a characteristic length less than or equal to 100 microns;
   said carbon fiber is present as chopped fiber with a characteristic length less than or equal to 1000 microns;
   said expanded graphite is present as powder, particulate, flake or wormlike strands where the characteristic feature is the expanded sheet-to-sheet spacing which is at least 0.418 nanometers;
   said graphene is present as powder where the individual elements are graphene sheets or platelets with a characteristic thickness less than 20 nanometers and an in-plane dimensions between 20 nanometers and 200 microns; and
   said carbon nanotubes are present as powder where the individual elements are carbon nanotubes with a diameter less than 500 nanometers.
6. The abradable seal material of embodiment 3 wherein one or more of:
   said aluminum nitride is present at 1.0% to 60.0% by weight of the abradable seal material;
   said boron nitride is present at 1.0% to 60.0% by weight of the abradable seal material;
   said silicon carbide is present at 1.0% to 60.0% by weight of the abradable seal material;
   said carbon fiber is present at 1.0% to 60.0% by weight of the abradable seal material;
   said expanded graphite is present at 1.0% to 60.0% by weight of the abradable seal material;
   said graphene is present at 1.0% to 60.0% by weight of the abradable seal material; and
   said carbon nanotubes are present at 1.0% to 60.0% by weight of the abradable seal material.
7. The abradable seal material of embodiment 1 having:
   a by weight content of said thermal conductivity-enhancing filler of 1.0% to 60.0%.
8. The abradable seal material of embodiment 1 having:
   a by weight content of said polyimide foam matrix is 40.0% to 99.0%.
9. The abradable seal material of embodiment 1 wherein:
   said aluminum nitride is present at 1.0% to 60.0% by weight of the abradable seal material.
10. The abradable seal material of embodiment 1 wherein:
   said boron nitride is present at 1.0% to 60.0% by weight of the abradable seal material.
11. The abradable seal material of embodiment 1 wherein:
   said silicon carbide is present at 1.0% to 60.0% by weight of the abradable seal material.
12. The abradable seal material of embodiment 1 wherein:
   said carbon fiber is present at 1.0% to 60.0% by weight of the abradable seal material.
13. The abradable seal material of embodiment 1 wherein:
   said expanded graphite is present at 1.0% to 60.0% by weight of the abradable seal material.
14. The abradable seal material of embodiment 1 wherein:
   said graphene is present at 1.0% to 60.0% by weight of the abradable seal material.
15. The abradable seal material of embodiment 1 wherein:
   said carbon nanotubes are present at 1.0% to 60.0% by weight of the abradable seal material.
16. A seal including the abradable seal material of embodiment 1 and further comprising:
   a substrate to which the abradable seal material is secured.
17. The seal of embodiment 10 being a continuous or segmented annulus.
18. A turbomachine comprising the seal of embodiment 10 and further comprising:
   a rotor having a metallic sealing edge in facing proximity or contact with a face of the abradable seal material.
19. The turbomachine of embodiment 12 being a gas turbine engine wherein:
   the metallic sealing edge comprises a knife edge; and
   the rotor is a compressor rotor.
20. A method for manufacturing the abradable seal material of embodiment 1, the method comprising:
   preparing a liquid polyimide precursor with said thermal conductivity-enhancing filler and blowing agent;
   introducing the liquid polyimide precursor to a mold; and
   heating to a temperature sufficient to cure said polyimide precursor to form a polyimide foam.
21. A method for using the abradable seal material of embodiment 1, the method comprising:
   rotating a rotor bearing a metallic knife edge sealing element, the rotating causing a rotating rub between the sealing element and the abradable seal material.

One or more embodiments have been described. Nevertheless, it will be understood that various modifications may be made. For example, when applied to an existing baseline configuration, details of such baseline may influence details of particular implementations. Accordingly, other embodiments are within the scope of the following claims.

## Claims

1. An abradable seal material comprising:
a polyimide foam matrix; and
a thermal conductivity-enhancing filler in the matrix.

2. The abradable seal material of claim 1 wherein:
the thermal conductivity-enhancing filler is effective to provide the abradable seal material with a thermal conductivity at least 100% greater than a thermal conductivity of the polyimide foam matrix at the same porosity.

3. The abradable seal material of claim 1 wherein:
the filler comprises material is selected from the group consisting of aluminum nitride, boron nitride, silicon carbide, carbon fiber, expanded graphite, graphene, carbon nanotubes, and combinations thereof.

4. The abradable seal material of claim 3 wherein one or more of:
said aluminum nitride is present as particles of at least 95% purity by weight;
said boron nitride is present as particles or nanoplatelets;
said silicon carbide is present as chopped fiber;
said carbon fiber is present as chopped fiber;
said expanded graphite is present as powder or wormlike strands;
said graphene is present as powder; and
said carbon nanotubes are present as powder of at least 80% purity.

5. The abradable seal material of claim 3 wherein one or more of:
said aluminum nitride is present as particles of characteristic size less than or equal to 1000 micrometers;
said boron nitride is present as particles of characteristic size less than or equal to 200 micrometers or nanoplatelets of in-plane dimension of less than 200 micrometers and a thickness of less than 20 nanometers;
said silicon carbide is present as chopped fiber with a characteristic length less than or equal to 100 microns;
said carbon fiber is present as chopped fiber with a characteristic length less than or equal to 1000 microns;
said expanded graphite is present as powder, particulate, flake or wormlike strands where the characteristic feature is the expanded sheet-to-sheet spacing which is at least 0.418 nanometers;
said graphene is present as powder where the individual elements are graphene sheets or platelets with a characteristic thickness less than 20 nanometers and an in-plane dimensions between 20 nanometers and 200 microns; and
said carbon nanotubes are present as powder where the individual elements are carbon nanotubes with a diameter less than 500 nanometers.

6. The abradable seal material of claim 3 wherein one or more of:
said aluminum nitride is present at 1.0% to 60.0% by weight of the abradable seal material;
said boron nitride is present at 1.0% to 60.0% by weight of the abradable seal material;
said silicon carbide is present at 1.0% to 60.0% by weight of the abradable seal material;
said carbon fiber is present at 1.0% to 60.0% by weight of the abradable seal material;
said expanded graphite is present at 1.0% to 60.0% by weight of the abradable seal material;
said graphene is present at 1.0% to 60.0% by weight of the abradable seal material; and
said carbon nanotubes are present at 1.0% to 60.0% by weight of the abradable seal material.

7. The abradable seal material of claim 1 having:
a by weight content of said thermal conductivity-enhancing filler of 1.0% to 60.0%.

8. The abradable seal material of claim 1 having:
a by weight content of said polyimide foam matrix is 40.0% to 99.0%.

9. The abradable seal material of claim 1 wherein:
said thermal conductivity-enhancing filler comprises aluminum nitride at 1.0% to 60.0% by weight of the abradable seal material; and/or
said thermal conductivity-enhancing filler comprises boron nitride at 1.0% to 60.0% by weight of the abradable seal material; and/or
said thermal conductivity-enhancing filler comprises silicon carbide at 1.0% to 60.0% by weight of the abradable seal material; and/or
said thermal conductivity-enhancing filler comprises carbon fiber at 1.0% to 60.0% by weight of the abradable seal material; and/or
said thermal conductivity-enhancing filler comprises expanded graphite at 1.0% to 60.0% by weight of the abradable seal material; and/or
said thermal conductivity-enhancing filler comprises graphene at 1.0% to 60.0% by weight of the abradable seal material; and/or
said thermal conductivity-enhancing filler comprises carbon nanotubes at 1.0% to 60.0% by weight of the abradable seal material.

10. A seal including the abradable seal material of any one of claims 1 to 9 and further comprising:
a substrate to which the abradable seal material is secured.

11. The seal of claim 10 being a continuous or segmented annulus.

12. A turbomachine comprising the seal of claim 10 and further comprising:
a rotor having a metallic sealing edge in facing proximity or contact with a face of the abradable seal material.

13. The turbomachine of claim 12 being a gas turbine engine wherein:
the metallic sealing edge comprises a knife edge; and
the rotor is a compressor rotor.

14. A method for manufacturing the abradable seal material of any one of claims 1 to 9, the method comprising:
preparing a liquid polyimide precursor with said thermal conductivity-enhancing filler and blowing agent;
introducing the liquid polyimide precursor to a mold; and
heating to a temperature sufficient to cure said polyimide precursor to form a polyimide foam.

15. A method for using the abradable seal material of any one of claims 1 to 9, the method comprising:
rotating a rotor bearing a metallic knife edge sealing element, the rotating causing a rotating rub between the sealing element and the abradable seal material.
